# EUROPÄISCHE PATENTSCHRIFT

(11) **EP 0 608 523 B1**
(45) Veröffentlichungstag und Bekanntmachung des Hinweises auf die Patenterteilung: **13.08.1997**
(21) Anmeldenummer: 93119859.2
(22) Anmeldetag: 09.12.1993
(51) Int. Cl.: F16K 7/16, F16K 31/60, F16K 31/50

(54) **Membranventil mit Schliesshubbegrenzung**
Diaphragm valve with closure lift stop
Soupape à diaphragme avec limiteur de course de fermeture

(30) Priorität: 29.01.1993 DE 4302556
(43) Veröffentlichungstag der Anmeldung: 03.08.1994
(73) Patentinhaber: GEBRÜDER MÜLLER APPARATEBAU GmbH & Co. KG, D-74653 Ingelfingen 2 (DE)
(72) Erfinder: Müller, Fritz, D-74653 Ingelfingen 2 (DE)
(74) Vertreter: Leyh, Hans, Dr.-Ing.

(56) Entgegenhaltungen:
- AT-B- 215 240
- DE-B- 2 755 206
- DE-U- 6 928 487
- DE-U- 8 620 263

## Beschreibung

Die Erfindung betrifft ein Membranventil mit Schließhubbegrenzung, bei welchem die Membran mittels eines Handrades über eine Gewindespindel betätigbar ist, wie dies im Oberbegriff von Anspruch 1 angegeben ist.

Aus DE-B-27 55 206 ist ein Membranventil der vorstehend genannten Art bekannt. Zur Fixierung der Mehrkantmutter in ihrer Lage ist ein Innenmehrkant an der Handradnabe vorgesehen, welcher den Außenmehrkant der Mehrkant mutter übergreift. Somit liegt kante gegen kante oder Fläche gegen Fläche.

Bei nicht hubwegbegrenzten, manuellen Ventilen mit Membranen aus elastomeren Materialien besteht die Gefahr, daß beim Schließvorgang die Membran durch zu hohe Schließkräfte zerstört werden kann. Tritt dies ein, so können die Membranventile nicht mehr dicht geschlossen werden.

Bei anderen Schließhubbegrenzungen, wird eine Doppelmutter oder eine Rutschkupplung verwendet, was jedoch konstruktiv sehr aufwendig ist.

Der Erfindung liegt daher die Aufgabe zugrunde, ein Membranventil mit einstellbarer Schließhubbegrenzung zu schaffen, das konstruktiv einfach aufgebaut ist und eine einfache sowie zuverlässige Justierung der Membran ermöglicht.

Nach der Erfindung wird dies mit einem Membran ventil erreicht, welches im Patentanspruch 1 angegeben ist.

Weitere vorteilhafte Ausgestaltungen der Erfindung sind in den Ansprüchen 2 bis 4 angegeben.

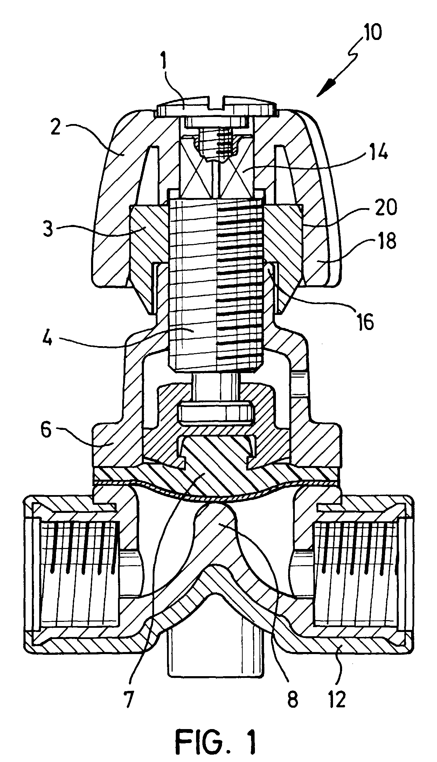

Eine beispielsweise Ausführungsform der Erfindung wird nachfolgend anhand der einzigen Figur der Zeichnung erläutert, die ein erfindungsgemäßes Membranventil im Schnitt zeigt.

Das Membranventil 10 hat ein Gehäuse bestehend aus einem Unterteil 12 und einem Oberteil 6. Das Unterteil 12 ist mit nicht näher bezeichneten Einlaß- und Auslaßanschlüssen versehen. Im Unterteil 12 ist ferner ein Ventilsitz 8 ausgebildet, mit welchem eine Membran 7 zusammenwirkt, welche über ein Druckstück 5 mit einer Ventilspindel 4 verbunden ist.
An ihrem zur Membran entgegengesetzten Ende ist die Ventilspindel 4 mit einem Vierkant 14 versehen, auf den ein Handrad 2, das einen entsprechenden Innenvierkant hat, aufgesetzt ist.
Das Handrad 2 ist durch eine Kappe 1 gehalten, die eine mit Gewinde versehenen Schaft hat, der in eine Gewindebohrung des Vierkantes 14 eingeschraubt ist.
Die Ventilspindel 4 ist mit einem Außengewinde versehen, das in ein Innengewinde des Gehäuse-Oberteiles 6 eingeschraubt ist.
Zwischen dem oberen Ende 16 des Gehäuse-Oberteiles 6 und dem Handrad 2 ist eine Gewindemutter 3 angeordnet, die auf das Außengewinde der Ventilspindel 4 geschraubt ist. In der dargestellten geschlossenen Stellung des Ventils 10 liegt die Gewindemutter 3 am oberen Ende 16 des Gehäuse-Oberteiles 6 an.
Zum Öffnen des Ventils wird das Handrad 2 von oben gesehen nach links gedreht, wodurch die Gewindespindel sich nach oben bewegt und dadurch die Membran 7 vom Ventilsitz 8 abgehoben und das Ventil geöffnet wird.
Das Handrad 2 hat einen unteren zur Membran hin gerichteten Abschnitt 18, der etwa glockenförmig ausgebildet ist und die Gewindemutter 3 übergreift und umschließt.

Der untere Abschnitt 18 des Handrades 2, der die Gewindemutter 3 übergreift, ist mit einer Innenverzahnung versehen, welche mit einer Außenverzahnung der Gewindemutter 3 in Eingriff steht, die in der äußeren Umfangsfläche 20 der Gewindemutter 3 ausgebildet ist.
Die beiden Verzahnungen können beispielsweise in Form eines Vieleckes, z.B. in Form eines Zwölfeckes ausgebildet sein.

Soll nun die Membran 7 einjustiert werden, so wird zunächst die Kappe 1 abgeschraubt und das Handrad 2 vom Vierkant 14 abgenommen. Danach wird die Gewindemutter 3 gelöst, das heißt auf der Ventilspindel 4 etwas nach oben weg vom oberen Ende 16 des Gehäuse-Oberteiles 6 geschraubt.
Nun wird das Handrad 2 - bezogen auf die Zeichnung - um eine horizontale Achse geschwenkt, so, daß der untere Abschnitt 18 des Handrades 2 nach oben gerichtet ist. Dann wird das Handrad 2 in dieser umgekehrten Ausrichtung wieder auf den Vierkant 14 der Ventilspindel 4 aufgesteckt.
In dieser Position kann die Ventilspindel 4 mit dem Druckstück 5 und der Membran 7 durch Drehen des Handrades 2 in Richtung zum oder weg vom Ventilsitz 8 neu einjustiert werden.
Nach dem Einjustieren wird die Gewindemutter 3 wieder auf der Ventilspindel 4 abwärts geschraubt, bis sie am oberen Ende 16 des Gehäuse-Oberteiles 6 anschlägt. Das Handrad 2 wird nun vom Vierkant 14 abgenommen, wieder in seine in der Zeichnung dargestellte Position gedreht und dann auf den Vierkant 14 aufgesetzt und gleichzeitig über die Gewindemutter 3 geschoben. Die Toleranzen reichen hierbei in der Regel aus, daß das Handrad 2 gleichzeitig auf den Vierkant 14 und die Gewindemutter 3 aufgesetzt werden kann. Sollte dies jedoch im Einzelfall einmal nicht möglich sein, so genügt es, die Gewindemutter 3 vor dem Aufsetzen des Handrades 2 etwas zu drehen.
Danach wird die Kappe 1 wieder auf das Handrad 2 aufgesetzt und in den Vierkant 14 eingeschraubt.
Wird nun das Handrad 2 zum Öffnen oder Schließen des Ventiles 10 gedreht, so wird die Gewindemutter 3 mitgenommen, da zwischen dem Handrad 2 und der Gewindemutter 3 eine formschlüssige Verbindung besteht.
Wird z.B. das in der Figur geschlossen dargestellte Ventil 10 geöffnet, so wird das Handrad entsprechend gedreht, und es werden die Ventilspindel 4 und die Gewindemutter 3 nach oben bewegt, wodurch die Membran 7 vom Ventilsitz 8 abgehoben wird.
Wenn nun das Ventil wieder geschlossen wird, so wird das Handrad entsprechend gedreht, wodurch die Ventilspindel 4 und die Mutter 3 nach unten auf den Ventilsitz 8 zu bewegt werden, bis die Gewindemutter 3 am oberen Ende 16 des Gehäuse-Oberteiles 6 anschlägt.
Durch dieses Anschlagen der Gewindemutter 3 am oberen Ende 16 des Gehäuse-Oberteiles 6 wird eine Begrenzung des Hubes der Ventilspindel 4 und damit der Membran 7 beim Schließvorgang erreicht.

## Patentansprüche

1. Membranventil mit einer Membrane (7), welche mittels eines Handrades (2) über eine Ventilspindel (4) zum Öffnen und Schließen im Zusammenwirken mit einem Ventilsitz (8) betätigbar ist, und mit einer einstellbaren Schließhubbegrenzung, welche eine axial zwischen dem Ventilgehäuse (6) und dem Handrad (2) angeordnete und auf das Außengewinde der Ventilspindel (4) zur Einjustierung einstellbar geschraubte Gewindemutter (3) hat, welche in Schließstellung des Ventils (10) am Ventilgehäuse (6) anschlagbar ist, wobei das Handrad (2) in seiner Betriebsstellung in Achsrichtung die Gewindemutter (3) übergreift, umschließt und bei der Öffnungs- und Schließbewegung des Ventils (10) die Gewindemutter (3) mitnimmt, **dadurch gekennzeichnet**, daß zur Einjustierung der Schließhubbegrenzung das Handrad (2) in einer um eine horizontale Achse gegenüber seiner Betriebsstellung verschwenkten Position auf die Ventilspindel (4) aufsteckbar und durch Verdrehen des Handrads (2) bei gelöster Gewindemutter (3) die axiale Position von Ventilspindel (4) mit Membrane (7) gegenüber dem Ventilsitz (8) axial ver- und einstellbar ist.

2. Membranventil nach Anspruch 1, **dadurch gekennzeichnet**, daß das Handrad (2) in dem die Gewindemutter (3) übergreifenden Teil eine Innenverzahnung und die Gewindemutter (3) eine entsprechende Außenverzahnung hat, die in Wirkeingriff mit der Innenverzahnung des Handrads (2) in der Betriebsstellung steht.

3. Membranventil nach Anspruch 1 oder 2, **dadurch gekennzeichnet**, daß die Innenverzahnung des Handrads (2) und die Außenverzahnung der Gewindemutter (3) in Form eines Vielecks, vorzugsweise eines Zwölfecks, ausgebildet sind.

4. Membranventil nach einem der Ansprüche 1 bis 3, **dadurch gekennzeichnet**, daß das Handrad (2) in seiner Betriebsstellung in Achsrichtung die Gewindemutter (3) glockenförmig übergreift.

## Claims

1. Diaphragm valve having a diaphragm (7), which can be actuated by means of a handwheel (2) via a valve spindle (4) for opening and closing in cooperation with a valve seat (8), and having adjustable closing stroke limitation which has a threaded nut (3) adjustably screwed onto the external thread of the valve spindle (4) for adjustment and arranged axially between the valve housing (6) and the handwheel (2), which threaded nut (3) can be stopped at the valve housing (6) in the closing position of the valve (10), wherein the handwheel (2) grips, surrounds, the threaded nut (3) in the axial direction in its operating position, and during the opening and closing movement of the valve (10) picks up the threaded nut (3), characterised in that for adjustment of the closing stroke limitation, the handwheel (2) can be placed on the valve spindle (4) in a position pivoted about a horizontal axis with respect to its operating position, and by rotating the handwheel (2) when the threaded nut (3) is released, the axial position of valve spindle (4) and diaphragm (7) can be axially altered and adjusted with respect to the valve seat (8).

2. Diaphragm valve according to claim 1, characterised in that the handwheel (2) has internal gearing in the part gripping the threaded nut (3) and the threaded nut (3) has corresponding external gearing, which actively engages with the internal gearing of the handwheel (2) in the operating position.

3. Diaphragm valve according to claim 1 or 2, characterised in that the internal gearing of the handwheel (2) and the external gearing of the threaded nut (3) are designed in the shape of a square, preferably a dodecagon.

4. Diaphragm valve according to one of claims 1 to 3, characterised in that the handwheel (2) grips the threaded nut (3) like a bell in the axial direction in its operating position.

## Revendications

1. Soupape à diaphragme comportant un diaphragme (7), laquelle peut être actionnée, au moyen d'un volant (2), par une tige de soupape (4) pour l'ouverture et la fermeture, en coopérant avec un siège de soupape (8), et comportant un limiteur de course de fermeture qui comprend un écrou fileté (3) monté entre le corps (6) et le volant (2), qui peut être, de manière réglable, vissé sur le filetage externe de la tige de soupape (4) pour la mise au point, l'écrou pouvant venir en butée sur le corps (6) en position de fermeture de la soupape (10), le volant (2), en position de travail, recouvrant dans le sens axial et entourant l'écrou fileté (3), et entraînant l'écrou fileté (3) dans les mouvements d'ouverture et de fermeture de la soupape, caractérisée en ce que, pour le réglage du limiteur de course de fermeture, le volant (2) peut être relevé sur la tige de soupape (4) dans une position pivotée autour d'un axe horizontal par rapport à sa position de travail et, par rotation du volant avec l'écrou fileté (3) desserré, la position axiale de la tige de soupape (4) avec diaphragme (7) peut être ajustée et réglée axialement par rapport au siège de soupape (8).

2. Soupape à diaphragme suivant la revendication 1, caractérisée en ce que le volant (2), dans la partie qui entoure l'écrou fileté (3), comporte une denture interne et l'écrou fileté (3) une denture externe qui reste engrenée avec la denture interne du volant, en position de travail.

3. Soupape à diaphragme suivant la revendication 1 ou 2, caractérisée en ce que la denture interne du volant (2) et la denture externe de l'écrou fileté (3) sont prévues sous la forme d'un polygone, de préférence un dodécagone.

4. Soupape à diaphragme suivant l'une des revendications 1 à 3, caractérisée en ce que le volant (2) entoure dans le sens axial, en forme de cloche, l'écrou fileté (3) dans sa position de travail.
